(19) Europäisches Patentamt
European Patent Office
Office européen des brevets

(11) **EP 0 632 943 B1**

(12) **EUROPEAN PATENT SPECIFICATION**

(45) Date of publication and mention
of the grant of the patent:
**27.10.1999  Bulletin 1999/43**

(21) Application number: **93908202.0**

(22) Date of filing: **26.02.1993**

(51) Int Cl.6: **H04B 15/04**

(86) International application number:
**PCT/SE93/00161**

(87) International publication number:
**WO 93/19567 (30.09.1993 Gazette 1993/24)**

(54) **METHOD OF ELIMINATING REPETITIVE INTERFERING SIGNALS**

VERFAHREN ZUR ELIMINATION VON WIEDERHOLENDEN INTERFERENZSIGNALEN

PROCEDE D'ELIMINATION DE SIGNAUX BROUILLEURS REPETITIFS

(84) Designated Contracting States:
**DE ES FR GB IT SE**

(30) Priority: **23.03.1992  SE 9200879**

(43) Date of publication of application:
**11.01.1995  Bulletin 1995/02**

(73) Proprietor: **CINVENTA AKTIEBOLAG**
**S-431 37 Mölndal (SE)**

(72) Inventor: **LINDECRANTZ, Kaj**
**S-421 68 Västra Frölunda (SE)**

(74) Representative: **Perklev, Karin Cecilia**
**AWAPATENT AB,**
**P.O. Box 5117**
**200 71 Malmö (SE)**

(56) References cited:
**EP-A- 0 150 246**          **EP-A- 0 253 902**
**DE-A- 3 517 113**

## Description

The present invention relates to a method of eliminating repetitive interfering signals from a sampled input signal by subtracting the interfering signal.

In all measuring and signal processing situations, interfering signals constitute a more or less serious problem.

In many cases, this problem can be solved by ordinary, linear band stop filtration. However, this is not possible if the interesting signal and the interfering signal have frequency components in the same frequency range, for example if the interesting signal has frequency components around 50 Hz and the interference originates from the mains in the form of a mains frequency interference. Medical signals such as ECG, EEG, etc., are typical examples of such signals.

Document DE-A-3 517 113, constituting the closest prior art, describes a system for suppression of interference caused by the mains supply.

A different method of eliminating interfering signals is to simply subtract the interfering signal from the interfered signal. There are prior art methods using this principle, but to make them function, the appearance of the interfering signal must be known. In the example with mains frequency interference, it must therefore be assumed that the frequency is stable. Only perfectly sinusoidal signals can be eliminated by such a method. Even if the interfering signal is supplied directly from the wall socket, the result after subtraction will not be satisfactory, since the mains interference is not perfectly sinusoidal. On the one hand, the frequency varies slightly and, on the other hand, and this is the biggest problem, e.g. thyristor controls and motors interfere the signal such that, in addition to the frequency 50 Hz, it will also contain overtones. To eliminate the harmonics, one more system for each harmonic must be available, and the appearance of the harmonic must be known.

The object of the present invention is to provide a method of eliminating interfering signals, in which the appearance of the interfering signal need not be known.

The method mentioned by way of introduction is characterised by the steps of

defining, for each sample in one period of the interference of the input signal, a sample value in an interfering signal pulse, the number of samples in the interfering signal pulse corresponding to the number of samples in one period of the interference of the input signal;

detecting that a new period of the interference of the input signal has been initiated;

subtracting the sample values of the interfering signal pulse from the corresponding sample values of the input signal;

modifying the sample values of the interfering signal pulse on the basis of the sample values of the input signal, thereby adaptively adjusting the interfering signal pulse to the present appearance of the interference;

repeating the subtraction and the modification, until it is detected that a new period of the interference of the input signal has been initiated, or until the entire interfering signal pulse has been passed.

The invention will now be described with reference to the accompanying drawings which illustrate an example how to use the method according to the invention.

Fig. 1 schematically illustrates how a device which concretises the method according to the invention may be composed.

Fig. 2 shows an example of the appearance of an input signal S.

Fig. 2b illustrates a mains frequency signal N.

Fig. 2c illustrates the mains frequency pulses P.

Fig. 2d illustrates an output signal U.

Fig. 3a illustrates the input signal S when sampled.

Fig. 3b illustrates the samples in an interfering signal pulse B.

Fig. 4 shows a set of interfering signal pulses $B_0$ to $B_3$ having dissimilar phase positions.

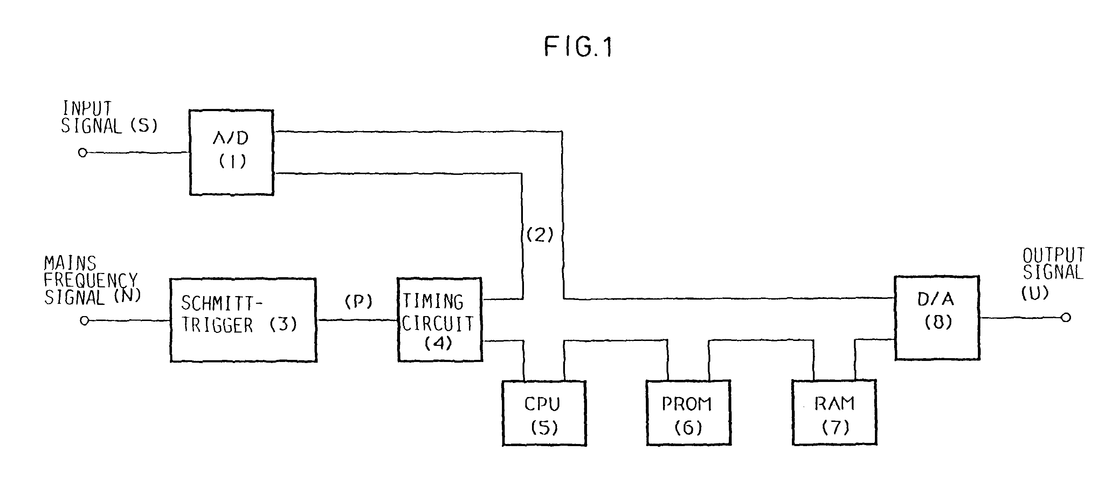

Fig. 1 schematically illustrates an example of a circuit solution which concretises the method according to the invention. In this example, the interfering signal originates from the mains and is called mains frequency signal N. The input signal S is a simulated ECG-signal which is distorted by the interference from the mains. The input signal S is supplied to an A/D-converter 1 in which it is sampled. The mains frequency signal N, i.e. a signal which is synchronous with the mains frequency and which has been generated by e.g. step-down transformation of the mains voltage, is supplied to a Schmitt-trigger 3. The Schmitt-trigger generates pulses 3 which are supplied to a timing circuit 4. A static read-write memory RAM 7, a programmable read only memory PROM 6, a central processing unit CPU 5 and a D/A-converter 8 which supplies an output signal U are connected to a bus 2.

Next follows a description of how the method according to the invention functions for the example with an interfering signal from the mains and an input signal in the form of an ECG-signal.

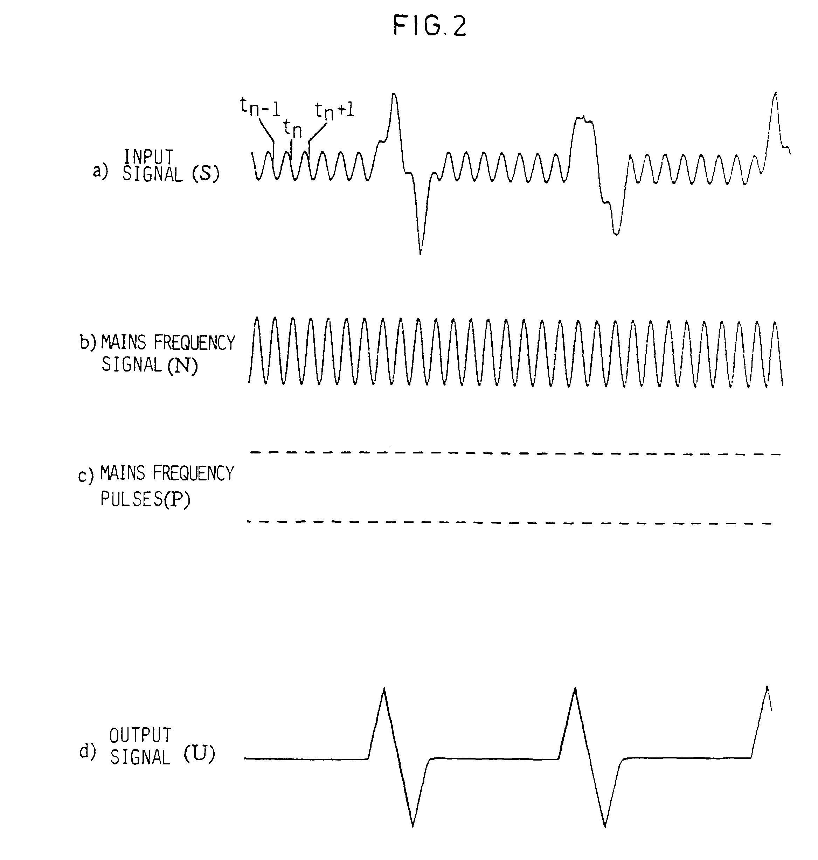

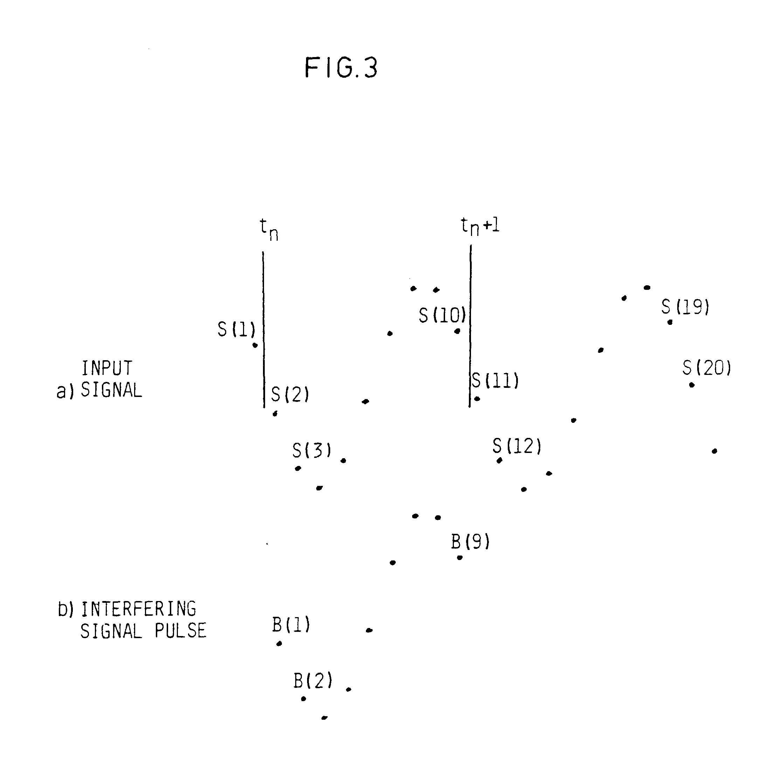

The input signal S is A/D-converted at a sampling frequency of e.g. 500 samples/s. The first sample of the input signal is designated S(1), the second sample S(2) etc., as illustrated in Fig. 3a. The Schmitt-trigger 3 generates mains frequency pulses P, as shown in Fig. 2c, viz. one pulse each time the falling edge of the mains frequency signal N has reached a certain voltage value. The mains frequency pulses are supplied to a timing circuit 4 which, as a result, detects the beginning of a new period of interference of the input signal. Of course, the Schmitt-trigger can be set instead to trigger in some other position on the mains frequency signal, e.g. the peak value, the period being counted from peak to peak. The function of the timing circuit will be described in more detail below. The times for the beginning of a new period are designated $t_{n-1}$, $t_n$, $t_{n+1}$ etc.

The sampling frequency of the A/D-converter 1 is selected to be a value which is suitable considering the appearance of the expected input signal. The upward-counting frequency of the timing circuit must be higher than the sampling frequency of the A/D-converter and preferably equal to the sampling frequency multiplied by 2 raised to n, n being an integer.

In the read-write memory 7, a buffer is allocated, in which an interfering signal pulse B, see Fig. 3, is stored. First, there is no interfering signal pulse B in the buffer, but it is created gradually on the basis of the sample values of the input signal, while possibly admixing the previous sample value(s) of the interfering signal. The interfering signal pulse is one period long and contains the same number of samples as does one period of the interference of the input signal. If the mains frequency is about 50 Hz and the sampling frequency is 500 samples/s, the interfering signal pulse consequently contains about 10 samples. The buffer must thus be so large as to accommodate at least 10 samples.

From the time $t_n$ until next time a new period of the interfering signal is detected, i.e. to the time $t_{n+1}$, the samples in the interfering signal pulse B are subtracted one by one from the samples in the input signal S which thus is relieved of the interference and can be output as the output signal U via the D/A-converter 8. The output signal U which is relieved of the interference is shown in Fig. 2d.

Since the interfering signal pulse B is missing when initiating the method, a settling process appears until the interfering signal pulse has reached an appropriate value. In the following it is assumed that the settling process has been passed.

The subtraction of the interfering signal pulse B from the input signal S is thus begun at $t_n$ and continues to $t_{n+1}$, whereupon the subtraction is restarted from the beginning of B. In Fig. 3, the output signal U thus consists of [S(2)-B(1)], [S(3)-B(2)], ..., [S(10)-B(9)], [S(11)-B(1)], [S(12)-B(2)], ..., [S(19)-B(9)], ...etc.

Thus, the interfering signal pulse B must contain a period of the interfering signal with the correct amplitude and the correct phase position. This is accomplished by modifying or adaptively updating the interfering signal pulse B such that the average of those components of the input signal which are not synchronous with the interfering signal becomes essentially zero for each sample position. This can be achieved by different techniques.

One technique is the modifying of the interfering signal pulse B on the basis of the sample values of the input signal. The interfering signal pulse can consist of e.g. an average of the sample values of the input signal as follows:

$$B(1,n) = \frac{1}{M} \sum_{i=0}^{M-1} S(1,n-i)$$

wherein B(1,n) represents sample 1 in the interfering signal pulse after updating by mains frequency pulse n etc. S(1,n-i) represents the first sample of the input signal after the mains frequency pulse n-i has arrived. M is an adaptation time constant which will be explained in more detail below. This technique of modifying the interfering signal pulse necessitates access to a fairly long sequence of the input signal S.

Another technique of modifying the interfering signal pulse, which does not require a very long sequence of the input signal S, is involving also the previous sample value(s) of the interfering signal pulse in the modification. Suitably, a portion of the previous value of the interfering signal pulse is replaced with a portion of the value of the input signal as follows.

$$B(1,n) = \frac{B(1,n-1)}{M} (M-1) + \frac{S(2)}{M}$$

$$B(2,n) = \frac{B(2,n-1)}{M} (M-1) + \frac{S(3)}{M}$$

:

$$B(9,n) = \frac{B(9,n-1)}{M} (M-1) + \frac{S(10)}{M}$$

$$B(1,n+1) = \frac{B(1,n)}{M} (M-1) + \frac{S(11)}{M}$$

$$\vdots$$

$$B(9,n+1) = \frac{B(9,n)}{M} (M-1) + \frac{S(19)}{M}$$

wherein M is the adaptation time constant which is selected as a positive integer which is higher than 0. By a suitable choice of M, for example 32, those components of the input signal S which are not synchronous with the mains frequency can be caused to have an average of approximately 0. An M which is too high yields an adaptation time which is unnecessarily long when the interference changes, whereas an M which is too low yields distortion owing to residues of the input signal S in the interfering signal pulse B.

If the input signal contains a DC voltage component, or components of very low frequency, these may appear in the interfering signal pulse B and are then eliminated at the same time as the interference. This is not desirable, since the DC voltage component or the components of very low frequency are probably not part of the interference but are included in the interesting signal. Elimination of these components can be avoided if the updating of the interfering signal pulse B is supplemented with elimination of the average level as follows.

$$B(1,n) = \frac{B(1,n-1)}{M} (M-1) + \frac{S(2)}{M} - \bar{B}$$

$$\bar{B} = \frac{1}{K} \sum_{j=1}^{K} B(j,n)$$

wherein K is the number of samples in the interfering signal pulse. Thus, in the example stated, K=9.

The function of the timing circuit 4 will now be described. The timing circuit is set and read by software and is initially set to zero. It begins to count upwards at a frequency of e.g. 16 kHz, when it is supplied with a pulse from the Schmitt-trigger 3 on the input. Since the Schmitt-trigger 3 supplies a pulse on the output each time the falling edge of the mains frequency signal has reached a certain voltage value, the timing circuit begins to count upwards each time a new period of the interference of the input signal is initiated.

Each time a sample of the input signal S is taken, the timing circuit 4 is read. If its value differs from zero, this means that a new period of the mains frequency signal N, and thus also the mains frequency interference in the input signal, has been initiated after the preceding sample of the input signal S was taken. See Fig. 3. The time when a new period was initiated, i.e. when the Schmitt-trigger supplied a pulse on the outlet, thus is called $t_n$. The value of the timing circuit 4 is stored, whereupon the timing circuit is immediately reset. Next time a new period is detected, the time is called $t_{n+1}$ etc.

According to Fig. 3 in which the frequency of the interfering signal is about 50 Hz and the sampling frequency is 500 samples/s, the interfering signal pulse comprises about 10 samples, and the difference in amplitude between two samples is relatively great. Since the sampling is not synchronised with the interfering signal, great residues of the interfering signal are obtained in the output signal U when carrying out the subtraction as described above.

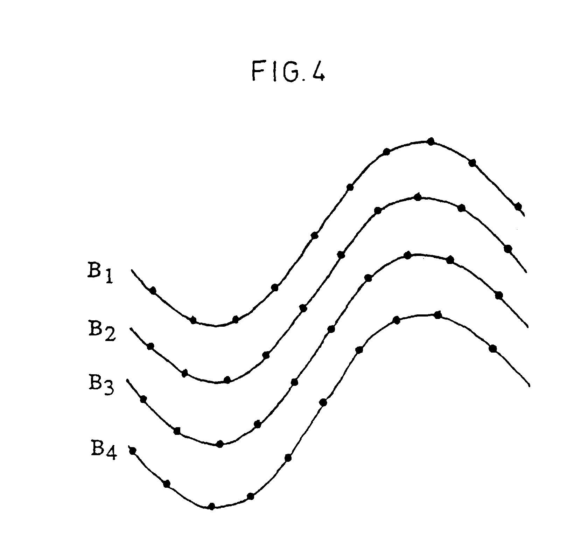

This problem can be solved by keeping several, e.g. four, versions of the interfering signal pulse $B_0$, $B_1$, $B_2$ and $B_3$, as shown in Fig. 4, having spaced-apart phase positions, in different buffers. When a mains frequency pulse has arrived and a new subtraction should be initiated, the interfering signal pulse is selected, whose phase position best agrees with the present phase position of the interference in the input signal. This is detected by means of the timing circuit 4 as follows.

Since the timing circuit 4 begins to count upwards when the mains frequency pulse arrives, the time from this moment until the next sample in the input signal S is taken can be measured. This can also be expressed as the time from $t_n$ to the first input signal sample in the period concerned. The choice of the interfering signal pulse thus is determined by the stored value of the timing circuit 4. At a clock frequency of 16 kHz and a sampling frequency of the A/D-converter 1 of 500 Hz, the timing circuit 4 can thus count upwards to a maximum of 31 between two samples in the input signal S. By dividing the value of the timing circuit by 8 and taking the integer part of the result, the number of the interfering signal pulse $B_0$ - $B_3$ to be used is obtained. The number by which the value of the timing circuit should be divided, is obtained from the included parameters in the following manner.

$$\frac{\text{Clock frequency}}{\text{number of interfering signal pulses x sampling frequency}}$$

Using the figures according to the example:

$$\frac{16\ \text{kHz}}{4 \times 500\ \text{Hz}} = 8$$

Of course, a better resolution can be obtained by using a greater number of interfering signal pulses, but this will be at the expense of adaption time or the suppression of the input signal S in the interfering signal pulses B. Updating of the interfering signal pulse used will take place as described above, in parallel with the subtraction by means of one of the interfering signal pulses $B_0$ - $B_3$.

By the expression repetitive interfering signals is meant that the method according to the invention may also be used when the interfering signal is not of even frequency, for example when the interference consists of more pulse-shaped signals, provided that the arrival of the interference can be detected from e.g. the input signal or a signal which is synchronous with the interference. The time between two interferences thus need not be constant. To make the method function in a satisfactory manner, the amplitude of the interference should not vary too quickly, since the system "picks up" the appearance thereof.

The method according to the invention may also be used when the interfering signal is greater than the actual signal. The arrival of the interference may then easily be detected directly in the input signal.

## Claims

1. Method of eliminating repetitive interfering signals from a sampled input signal by subtracting the interfering signal, **characterised** by the steps of

   defining, for each sample in one period of the interference of the input signal, a sample value in an interfering signal pulse, the number of samples in the interfering signal pulse corresponding to the number of samples in one period of the interference of the input signal;
   detecting that a new period of the interference of the input signal has been initiated;
   subtracting the sample values of the interfering signal pulse from the corresponding sample values of the input signal;
   modifying the sample values of the interfering signal pulse on the basis of the sample values of the input signal, thereby adaptively adjusting the interfering signal pulse to the present appearance of the interference;
   repeating the subtraction and the modification, until it is detected that a new period of the interference of the input signal has been initiated, or until the entire interfering signal pulse has been passed.

2. Method as claimed in claim 1, **characterised** in that the sample values of the interfering signal pulse are modified on the basis of the sample values of the input signal and the previous sample values of the interfering signal pulse.

3. Method as claimed in claim 2, **characterised** in that the interfering signal pulse B is modified as follows

$$B(1,n) = \frac{B(1,n-1)}{M}\ (M-1) + \frac{S(2)}{M}$$

$$B(2,n) = \frac{B(2,n-1)}{M}\ (M-1) + \frac{S(3)}{M}$$

$$\vdots$$

$$B(9,n) = \frac{B(9,n-1)}{M}\ (M-1) + \frac{S(10)}{M}$$

$$B(1,n+1) = \frac{B(1,n)}{M} (M-1) + \frac{S(11)}{M}$$

$$\vdots$$

$$B(9,n+1) = \frac{B(9,n)}{M} (M-1) + \frac{S(19)}{M}$$

wherein M is an adaptation time constant, S is the input signal and n is an integer.

4. Method as claimed in claim 2 or 3, **characterised** in that the interfering signal pulse B is modified as follows

$$B(1,n) = \frac{B(1,n-1)}{M} (M-1) + \frac{S(2)}{M} - \bar{B}$$

$$\bar{B} = \frac{1}{K} \sum_{j=1}^{K} B(j,n)$$

wherein K is the number of samples in the interfering signal pulse, S is the input signal and n is an integer.

5. Method as claimed in any one of the preceding claims, **characterised** in that the initiation of a new period of the interference is detected either directly in the input signal or in a signal which is synchronous with the interference.

6. Method as claimed in any one of the preceding claims, **characterised** in that at least two interfering signal pulses having different phase positions are defined; that the interfering signal pulse whose phase position best agrees with the phase position of the interfering period concerned is subtracted from the input signal; and that the determination of the phase position of the interfering signal is effected by measuring the time from the beginning of a new period of the interference until a new sample of the input signal is taken.

**Patentansprüche**

1. Verfahren zur Elimination sich wiederholender Interferenzsignale von einem abgetasteten Eingangssignal durch Subtraktion des Interferenzsignals, **gekennzeichnet durch** die folgenden Schritte:

Definition eines Abtastwertes in einem Interferenzsignal-Impuls für jede Abtastung in einer Periode der Interferenz des Eingangssignals, wobei die Anzahl der Abtastwerte des Interferenzsignal-Impulses der Anzahl der Abtastungen in einer Periode der Interferenz des Eingangssignals entspricht;
Ermitteln, daß eine neue Interferenzperiode des Eingangssignals begonnen hat;
Subtraktion der Abtastwerte des Interferenzsignal-Impulses von den korrepondierenden Abtastwerten des Eingangssignals;
Veränderung der Abtastwerte des Interferenzsignal-Impulses auf der Grundlage der Abtastwerte des Eingangssignals und somit adaptive Anpassung des Interferenzsignal-Impulses an das gegenwärtige Erscheinungsbild der Interferenz;
Wiederholung der Subtraktion und der Modifikation, bis ermittelt wird, daß eine neue Interferenzperiode des Eingangssignals begonnen hat oder bis der gesamte Interferenzsignal-Impuls durchlaufen wurde.

2. Verfahren nach Anspruch 1, **dadurch gekennzeichnet**, daß die Abtastwerte des Interferenzsignal-Impulses auf der Grundlage der Abtastwerte des Eingangssignals und der vorangehenden Abtastwerte des Interferenzsignal-Impulses modifiziert werden.

3. Verfahren nach Anspruch 2, **dadurch gekennzeichnet**, daß der Interferenzsignal-Impuls (B) wie folgt modifiziert wird:

$$B(1,n) = \frac{B(1,n-1)}{M} (M-1) + \frac{S(2)}{M}$$

$$B(2,n) = \frac{B(2,n-1)}{M} (M-1) + \frac{S(3)}{M}$$

$$\vdots$$

$$B(9,n) = \frac{B(9,n-1)}{M} (M-1) + \frac{S(10)}{M}$$

$$B(1,n+1) = \frac{B(1,n)}{M} (M-1) + \frac{S(11)}{M}$$

$$\vdots$$

$$B(9,n+1) = \frac{B(9,n)}{M} (M-1) + \frac{S(19)}{M} ,$$

wobei M eine Adaptionszeitkonstante, S das Eingangssignal und n eine Ganzzahl ist.

4.  Verfahren nach Anspruch 2 oder 3, **dadurch gekennzeichnet**, daß der Interferenzsignal-Impuls (B) wie folgt modifiziert wird:

$$B(1,n) = \frac{B(1,n-1)}{M} (M-1) + \frac{S(2)}{M} - \overline{B}$$

$$\overline{B} = \frac{1}{K} \sum_{j=1}^{K} B (j,n) ,$$

wobei K die Anzahl der Abtastungen in dem Interferenzsignal-Impuls, S das Eingangssignal und n eine Ganzzahl ist.

5.  Verfahren nach einem der vorangehenden Ansprüche, **dadurch gekennzeichnet**, daß der Beginn einer neuen Interferenzperiode entweder direkt anhand des Eingangssignals oder anhand eines Signals, welches synchron zur Interferenz ist, ermittelt wird.

6.  Verfahren nach einem der vorangehenden Ansprüche, **dadurch gekennzeichnet**, daß zumindest zwei Interferenzsignal-Impulse mit verschiedenen Phasenlagen definiert sind; daß der Interferenzsignal-Impuls, dessen Phasenlage am besten mit der Phasenlage der betroffenen Interferenzperiode übereinstimmt, von dem Eingangssignal subtrahiert wird; und daß die Ermittlung der Phasenlage des Interferenzsignals durch Messen der Zeit von dem Anfang einer neuen Interferenzperiode bis zur Aufnahme einer neuen Abtastung des Eingangssignals bewirkt wird.

**Revendications**

1.  Procédé permettant d'éliminer, dans un signal d'entrée échantillonné, des signaux parasites répétitifs par soustraction du signal parasite, caractérisé en ce qu'il comprend les opérations suivantes :

    définir, pour chaque échantillon se trouvant dans une période des parasites du signal d'entrée, une valeur échantillon présente dans une impulsion de signal parasite, le nombre d'échantillons présents dans l'impulsion de signal parasite correspondant au nombre d'échantillons qui se trouvent dans une période des parasites du signal d'entrée ;
    déterminer qu'une nouvelle période des parasites du signal d'entrée a commencé ;
    soustraire, des valeurs échantillons correspondantes du signal d'entrée, les valeurs échantillons de l'impulsion de signal parasite ;

modifier les valeurs échantillons de l'impulsion de signal parasite sur la base des valeurs échantillons du signal d'entrée, de manière à ajuster de façon adaptative l'impulsion de signal parasite à l'aspect courant des parasites ; et

répéter la soustraction et la modification jusqu'à ce qu'il soit déterminé qu'une nouvelle période des parasites du signal d'entrée a commencé, ou bien jusqu'à ce que l'impulsion de signal parasite toute entière a passé.

2. Procédé selon la revendication 1, caractérisé en ce que les valeurs échantillons de l'impulsion de signal parasite sont modifiées sur la base des valeurs échantillons du signal d'entrée et des valeurs échantillons précédentes de l'impulsion de signal parasite.

3. Procédé selon la revendication 2, caractérisé en ce que l'impulsion B de signal parasite est modifiée de la manière suivante :

$$B(1,n) = \frac{B(1,n-1)}{M} (M-1) + \frac{S(2)}{M}$$

$$B(2,n) = \frac{B(2,n-1)}{M} (M-1) + \frac{S(3)}{M}$$

$$\vdots$$

$$B(9,n) = \frac{B(9,n-1)}{M} (M-1) + \frac{S(10)}{M}$$

$$B(1,n+1) = \frac{B(1,n)}{M} (M-1) + \frac{S(11)}{M}$$

$$\vdots$$

$$B(9,n+1) = \frac{B(9,n)}{M} (M-1) + \frac{S(19)}{M}$$

où M est une constante de temps d'adaptation, S est le signal d'entrée et n est un nombre entier.

4. Procédé selon la revendication 2 ou 3, caractérisé en ce que l'impulsion B de signal parasite est modifiée de la manière suivante :

$$B(1,n) = \frac{B(1,n-1)}{M} (M-1) + \frac{S(2)}{M} - \bar{B}$$

$$\bar{B} = \frac{1}{K} \sum_{j=1}^{K} B(j,n)$$

où K est le nombre d'échantillons se trouvant dans l'impulsion de signal parasite, S est le signal d'entrée et n est un nombre entier.

5. Procédé selon l'une quelconque des revendications précédentes, caractérisé en ce que le début d'une nouvelle période des parasites est déterminée soit directement dans le signal d'entrée, soit dans un signal qui est synchrone avec les parasites.

6. Procédé selon l'une quelconque des revendications précédentes, caractérisé en ce qu'au moins deux impulsions de signal parasite ayant des positions de phase différentes sont définies ; en ce que l'impulsion de signal parasite dont la position de phase s'accorde le mieux avec la position de phase de la période considérée des parasites est soustraite du signal d'entrée ; et en ce qu'on effectue la détermination de la position de phase du signal parasite en mesurant le temps compris entre le début d'une nouvelle période des parasites et le moment où on prend un nouvel échantillon du signal d'entrée.

FIG.1

# FIG.2

a) INPUT SIGNAL (S)

b) MAINS FREQUENCY SIGNAL (N)

c) MAINS FREQUENCY PULSES(P)

d) OUTPUT SIGNAL (U)

# FIG.3

$t_n$       $t_{n+1}$

INPUT
a) SIGNAL

S(1)

S(2)

S(3)

S(10)

S(11)

S(12)

S(19)

S(20)

B(9)

b) INTERFERING
SIGNAL PULSE

B(1)

B(2)

FIG.4